Europäisches Patentamt

European Patent Office

Office européen des brevets

(19)

(11) Publication number: **0 231 985 B1**

## (12) EUROPEAN PATENT SPECIFICATION

(45) Date of publication of patent specification: **14.08.91**

(21) Application number: **87200267.0**

(22) Date of filing: **12.10.84**

(51) Int. Cl.⁵: **B24B 19/26,** F16G 5/16

(60) Publication number of the earlier application in accordance with Art.76 EPC: **0 143 293**

(54) **Process and apparatus for machining a transverse element for a driving belt.**

(30) Priority: **11.11.83 NL 8303870**

(43) Date of publication of application:
**12.08.87 Bulletin 87/33**

(45) Publication of the grant of the patent:
**14.08.91 Bulletin 91/33**

(84) Designated Contracting States:
**AT CH DE FR GB IT LI NL SE**

(56) References cited:
GB-A- 2 013 116
US-A- 2 697 312
US-A- 3 853 499

IBM TECHNICAL DISCLOSURE BULLETIN, vol. 17, no. 12, May 1975, page 3523, Armonk, US; D.E. PARKER et al.: "Grinding machine"

(73) Proprietor: **Van Doorne's Transmissie B.V.**
**Dr. Hub van Doorneweg 120 Postbus 500**
**NL-5026 RA Tilburg(NL)**

(72) Inventor: **Van Dijk, Johannes Abraham**
**Visserstraat 2**
**NL-5612 BT Eindhoven(NL)**

(74) Representative: **Timmermans, Anthonius**
**C.Th., Ir.**
**European Patent Attorneys Octrooibureau**
**Zuid P.O. Box 2287**
**NL-5600 CG Eindhoven(NL)**

## Description

The invention relates to a process for machining a substantially flat transverse element for a driving belt, provided with an edge intended to make contact with an endless carrier of the driving belt, having a curvature both in the running direction of the belt and in a direction perpendicular thereto. A process in accordance with the preamble of claim 1 is known from GB-A-2013116.

The curvature in two perpendicular directions is advantageous in that it reduces wear due to the relative movement of the transverse element vis-à-vis the carrier which might result in belt rupture. In consequence of the double curvature additional stresses earlier encountered in the carrier due to the transverse element making a tilting movement as it enters between the sheaves of the V-shaped pully, whereby the sharp edge of the curved surface was pressed against the carrier, are obviated.

The invention also relates to an apparatus for conducting the process.

The document mentioned above discloses a method for the machining of a substantially flat element of the above described kind whereby the curvature in both directions is produced in a single operation step by means of an abrasive belt; it has however been found that this method has the disadvantage that the curvatures of the edges of different elements may show differences with respect to each other which are unacceptable for satisfactory operation of the belts on which they will be mounted.

It is an object of the present invention to eliminate or in any case lessen this drawback.

A process according to the invention for producing a double curved surface on an edge of an essentially flat transverse element for use as a power transmitting element on an endless carrier to form a driving belt, which edge can in use come into contact with the endless carrier of the driving belt, whereby by a single grinding operation a surface is formed on said edge which is curved both in the running direction of the belt and in a direction at right angles thereto, is characterized by the fact that the grinding is carried out with the aid of a rotating cylinder having an outer circumference which is concave with respect to the axis of rotation and is provided with an abrasive surface, the edge to be ground being brought into contact with said abrasive surface, the transverse element occupying during the grinding operation a position such that the flat surface of the element lies in a plane substantially perpendicular to the axis of the grinding cylinder and that the grinding cylinder and the element perform a rocking movement with respect to each other, in said plane.

In the I.B.M. Technical Disclosure Bulletin Vol.

17, no 12, May 1975, a method and apparatus have been disclosed for grinding the edge of a flat workpiece using a rotating hollow cylindrical grinding drum lined on the inside with abrasive material with which the edge to be ground is brought into contact. The grinding drum and the workpiece perform a relative rocking movement in a plane substantially parallel to the axis of rotation due to which a double curvature on the edge is realized.

As the flat workpiece is introduced into the open end of the hollow drum in such manner that the flat surface is substantially perpendicular to the axis of rotation of the drum the curvature of the "longer" side of the workpiece will after grinding be substantially equal to that of the inner side of the drum. Because according to the invention the rocking movement takes place in a plane substantially perpendicular to the axis of rotation the "shorter" curvature is determined by the concave outer circumference of the abrasive cylinder and the "longer" curvature by rocking movement. For the flat transverse elements, to which the invention is limited, the "shorter" curvature is practically always the same and independent of the size of the elements. Therefore one size grinding cylinder is sufficient to realize this "short" curvature. The "longer" curvature however is related to the size of the transverse element. When using a process according to the invention different sizes of transverse elements can therefore be ground with the same concave cylinder.

The apparatus for conducting the process according to the invention is characterized in that it is provided with a concave grinding cylinder which at a fixed position is rotatable on a shaft whilst it is also provided with a clamping device for gripping the transverse element such that the grinding device and the clamping device perform a movement vis-à-vis one another following a circular orbit whose axis crosses the axis of the grinding device at right angles.

The grinding cylinder may be lined on the outside with or consists entirely of abrasive material.

If the clamping device performs a rocking movement around the pivot point, the "longer" curvature of the edge can be easily varied by displacing the pivot point of the clamping device.

According to a special embodiment of the invention the transverse element or the grinding cylinder is arranged in such a position that the flat side of the element is not perpendicular to the axis of rotation. Also the concavity of the grinding cylinder may be asymmetrical. In that case the "short" curvature will be asymmetrical. This might be an advantage for some applications of driving belts. In most cases however a symmetrical "short" curvature will be desirable.

The invention will now be described by way of example with reference to the accompanying drawings, in which

Fig. 1 is a diagrammatic cross-sectional view through a pulley over which a driving belt moves;

Fig. 2 diagrammatically shows two power-transmitting push elements;

Fig. 3 depicts an element which can be fitted on a carrier consisting of two bands or band packages;

Fig. 4 is a diagrammatic view of a device according to the invention.

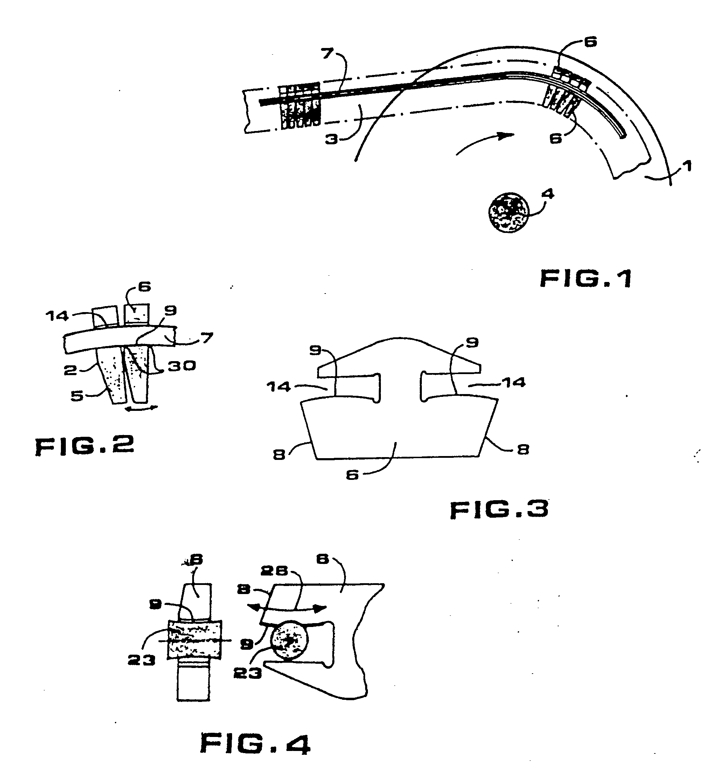

The transmission belt 3 represented in Fig. 1, which is provided with power-transmitting push elements (transverse elements) 6, can be used for transmitting a relatively large torque between two V-shaped pulleys, one of which is designated by the reference numeral 1. The spacing between the sheaves of the two V-shaped pulleys can be varied so as to attain a stepless variable transmission ratio. In such an arrangement the torque is transmitted by means of a power-transmitting force which is transferred through a number of push elements (transverse elements), on the understanding that the tension of the carrier 7 is at all times greater than the pushing force transmitted by the push elements 6 fitted on the carrier 7.

As appears from Fig. 1, the transverse elements 6 is, upon its entry between the sheaves of the V-shaped pulley 1, forced slightly outwards in a radial direction, whilst the transverse elements 6 also go through a tilting movement vis-à-vis one another round the contact area 2. As a result, the edges 30 are pressed against the carrier 7, whereas contact with the curved surface 9 is lost to some degree. The tilting of the transverse elements vis-à-vis one another is made possible by the tapering face 5. In order to eliminate the adverse effects, the curved surface 9 is also ground slightly convex in the "short" direction. This treatment has the additional benefit of affording a smooth ride of the curved surface 9 on the carrier 7. The driving belt 3 (Fig. 1) therefore consists of a plurality of transverse elements 6 slidably arranged on an endless carrier 7. The transverse elements 6 are slightly tapered inwardly in cross-section (face 5 in Fig. 2), making it easier for the driving belt 3 to pass with a curvature round the pulley 1 (Fig. 1). The number of transverse elements 6 arranged on the carrier 7 is such that they are in contact with one another and fill up the entire circumference. During operation of the driving belt 3 the tension in the carrier must be greater than the maximum pushing force that will be transmitted by the transverse elements 6 so as to prevent the straight portions of transmission belt 3 from sagging. The transverse elements 6 consist of a substantially non-deformable material and carrier 7 is formed, for example, by a package of metallic bands, i.e. a plurality of endless bands arranged one around another.

Fig. 2 presents a cross-sectional view of two transverse elements 6 which are positioned between the sheaves of the V-shaped pulleys 1. These elements 6 have a surface 9 shaped convexly in a direction perpendicular to the plane of drawing. The said elements 6 can tilt round a contact area 2. The space required for doing so is provided by the tapering face 5. The endless carrier 7 is accomodated in a recess 14.

Fig. 3 shows a front view of a transverse element 6 provided with two side faces 8 designed to cooperate with the sheaves of the V-shaped pulley, and a surface 9 over which the carrier 7 can be arranged. Both sides of the transverse element 6 have a recess 14 for accomodating the carrier 7. The two surfaces 9, intended for contacting the inside of a band package, are each of convex shape in the transverse direction.

Fig. 4 diagrammatically shows in plan-view and side-view the position of the grinding cylinder 23 and the element 8 to be ground. The cylinder 23 has a concave circumferential surface provided with abrasive material. The edge 9 of the slot of the element 8 obtains when it is brought into contact with the cylinder 23 a "short" curvature corresponding to the concave curvature of the cylinder 23. The "long" curvature is obtained by rocking the element 8 over a part of a circular track, as indicated by the arrow 28.

It has been found that the application of transverse elements which have been machined according to the process of the invention and arranged on a carrier consisting of a band or band package diminishes the load on the carrier. The convex shape of the surface which comes into contact with the endless carrier 7 prevents the edges of the surface from exerting undesirable forces on carrier 7 with the known transverse element; these forces manifested themselves especially upon entry of the transverse element 6 between the sheaves of the V-shaped pulley.

In the foregoing the invention has been described with reference to an embodiment in which the rotating grinding device is disposed fixedly in the radial direction during the grinding operation, whereas the transverse element is moved relative to the grinding device.

Within the purview of the invention comes also the embodiment in which the transverse element is held stationary during the grinding operation and the grinding device performs the requisite movements. A particularly advantageous embodiment is one in which two setups according to fig. 4 are applied, which are disposed opposite one another and can each rotate on their several, mutually parallel shafts, so that both surfaces 9 (Fig. 3) can be ground in one operation.

## Claims

1. Process for producing a double curved surface on an edge of an essentially flat transverse element (6) for use as a power transmitting element on an endless carrier (7) to form a driving belt, which edge can in use come into contact with the endless carrier of the driving belt, whereby by a single grinding operation a surface is formed on said edge which is curved both in the running direction of the belt and in a direction at right angles thereto, characterized in that the grinding is carried out with the aid of a rotating cylinder (23) having an outer circumference which is concave with respect to the axis of rotation and is provided with an abrasive surface, the edge (9) to be ground being brought into contact with said abrasive surface, the transverse element occupying during the grinding operation a position such that the flat surface of the element lies in a plane substantially perpendicular to the axis of the grinding cylinder (23) and that the grinding cylinder (23) and the element perform a rocking movement with respect to each other, in said plane.

2. Apparatus for carrying out the process according to claim 1 characterized in that the grinding cylinder (23) has a fixed position and that the flat transverse element is carried by a clamping device conveying the rocking movement around an axis which is parallel to the axis of the grinding cylinder (23).

3. Apparatus according to claim 2, characterized in that it is provided with two grinding cylinders disposed symmetrically relative to the clamping device.

## Revendications

1. Méthode pour la réalisation d'une surface doublement courbe sur le bord d'un élément transversal (6) substantiellement plan destiné à être utilisé comme organe de transfert de force sur un support sans fin (7) avec lequel est formée une courroie de transmission, le bord pouvant venir en contact avec le support de la courroie de transmission pendant le fonctionnement, et une surface, qui est courbe aussi bien dans la direction du parcours de la courroie que dans une direction perpendiculaire à ce parcours étant formée au moyen d'une seule opération de meulage, avec la caractéristique que le meulage est effectué au moyen d'un cylindre rotatif (23) avec un pourtour extérieur qui est concave par rapport à l'axe de rotation qui comporte une surface abrasive, le bord (9) à meuler étant mis en contact avec la surface abrasive, et l'élément transversal prenant au cours de l'opération de meulage une position telle que cet élément transversal se trouve dans un plan essentiellement perpendiculaire par rapport à l'axe du cylindre de meulage (23), et le cylindre de meulage (23) et l'élément exécutant l'un par rapport à l'autre un mouvement de balancement dans ce plan.

2. Dispositif pour l'exécution de la méthode selon la revendication 1, avec la caractéristique que le cylindre de meulage (23) prend une position fixe, et que l'élément transversal plan est supporté par un dispositif de serrage qui transmet le mouvement de balancement autour d'un axe orienté parallèlement à l'axe du cylindre de meulage (23).

3. Dispositif selon la revendication 2, avec la caractéristique que ce dispositif est équipé de deux cylindres de meulage disposés symétriquement par rapport au dispositif de serrage.

## Patentansprüche

1. Verfahren zur Herstellung einer zweifach gebogenen Oberfläche an einem Rand eines im wesentlichen flachen Querelements (6) für die Anwendung als kraftübertragendes Organ an einem endlosen Träger (7), womit ein Treibriemen gebildet wird, wobei der Rand während des Betriebs mit dem endlosen Träger des Treibriemens in Berührung kommen kann, und wobei mittels einer einzigen Schleifbearbeitung angebracht auf dem Rand eine Oberfläche gebildet wird, die sowohl in der Laufrichtung des Riemens wie in einer Richtung senkrecht zu dieser Laufrichtung gebogen ist, dadurch gekennzeichnet, daß das Schleifen mittels eines Drehzylinders (23) mit einem Außenumfang geschieht, der der Drehungsachse gegenüber hohl ist und der eine scheuernde Fläche hat, wobei der zu schleifende Rand (9) in Berührung mit der scheuernden Oberfläche gebracht wird und wobei das Querelement während der Schleifbearbeitung eine derartige Position einnimmt, daß die flache Oberfläche des Querelements in einer Ebene nahezu senkrecht zu der Achse des Schleifzylinders (23) gelegen ist, und der Schleifzylinder (23) und das Element in dieser Ebene eine Schaukelbewegung relativ zueinander ausführen.

2. Vorrichtung zur Durchführung des Verfahrens nach Anspruch 1, dadurch gekennzeichnet, daß der Schleifzylinder (23) eine feste Position einnimmt und daß das flache Querelement von einem Klemmvorrichtung getragen wird, die die Schaukelbewegung um eine Achse überträgt, die sich parallel zu der Achse des Schleifzylinders (23) erstreckt.

3. Vorrichtung nach Anspruch 2, dadurch gekennzeichnet, daß die Vorrichtung mit zwei symmetrisch gegenüber der Klemmvorrichtung aufgestellten Schleifzylindern ausgestattet ist.

**FIG.1**

**FIG.2**

**FIG.3**

**FIG.4**